# EUROPÄISCHE PATENTANMELDUNG

(11) **EP 3 979 444 A1**
(43) Veröffentlichungstag der Anmeldung: **06.04.2022**
(21) Anmeldenummer: 21196456.4
(22) Anmeldetag: 14.09.2021
(51) Int. Cl.: H02B 13/00, H02G 5/00, H02G 5/06

(54) **ELEKTRISCHE ENERGIEÜBERTRAGUNGSEINRICHTUNG MIT KOMPENSATIONSEINRICHTUNG ZUR DEHNUNGSKOMPENSATION UND ENTSPRECHENDE KOMPENSATIONSEINRICHTUNG**

(30) Priorität: 05.10.2020 DE 102020212522
(71) Anmelder: Siemens Energy Global GmbH & Co. KG, 81739 München (DE)
(72) Erfinder: Beutel, Stefan, 10555 Berlin (DE); Gänse, Steffen, 12687 Berlin (DE); Halm, Christian, 10439 Berlin (DE); Kleinschmidt, Andreas, 16515 Oranienburg (DE)

(57) **Zusammenfassung**

Die Erfindung betrifft eine elektrische Energieübertragungseinrichtung (10) mit mindestens einem elektrischen Strompfad (16), einem Kapselungsgehäuse (18), welches einen ersten und einen zweiten Abschnitt (24, 26) mit entsprechenden Wandungen (30) aufweist und den mindestens einen elektrischen Strompfad (16) in diesen Abschnitten (24, 26) nach außen kapselt und einer Kompensationseinrichtung (12) zur Dehnungskompensation bei der elektrischen Energieübertragungseinrichtung (10), wobei diese Kompensationseinrichtung (12) ein feststoffisoliertes Zwischenstück (36) pro elektrischem Strompfad (16) aufweist, das diesen elektrischen Strompfad (16) in einem Zwischenraum (28) zwischen dem ersten Abschnitt (24) und dem zweiten Abschnitt (6) des Kapselungsgehäuses (18) nach außen elektrisch isoliert bildet. Es ist vorgesehen, dass die Kompensationseinrichtung (12) pro feststoffisoliertem Zwischenstück (36) zusätzlich mindesten eine Klemmanordnung (38) mit mindestens einem elastischen Dichtelement (40) für ein dichtendes Befestigen des jeweiligen feststoffisolierten Zwischenstücks (36) an der Wandung (30) des ersten und/oder des zweiten Abschnitts (24, 26) aufweist.

Die Erfindung betrifft weiterhin eine Kompensationseinrichtung (12) zur Dehnungskompensation bei einer entsprechenden elektrischen Energieübertragungseinrichtung (10) mit Kapselungsgehäuse (18).

## Beschreibung

Die Erfindung geht aus von einer elektrischen Energieübertragungseinrichtung mit (i) mindestens einem elektrischen Strompfad, (ii) einem Kapselungsgehäuse, welches einen ersten und einen zweiten Abschnitt mit entsprechenden Wandungen aufweist und den mindestens einen elektrischen Strompfad in diesen Abschnitten nach außen kapselt und (iii) einer Kompensationseinrichtung zur Dehnungskompensation bei der elektrischen Energieübertragungseinrichtung, wobei diese Kompensationseinrichtung ein feststoffisoliertes Zwischenstück pro elektrischem Strompfad aufweist, das diesen Strompfad in einem Zwischenraum zwischen dem ersten Abschnitt und dem zweiten Abschnitt des Kapselungsgehäuses nach außen elektrisch isoliert bildet.

Die Erfindung geht weiterhin aus von einer Kompensationseinrichtung zur Dehnungskompensation bei einer entsprechenden elektrischen Energieübertragungseinrichtung mit Kapselungsgehäuse.

Die Kapselungsgehäuse von elektrischen Energieübertragungseinrichtungen erfahren durch den Betriebsstrom, der über den mindestens einen elektrischen Leiter fließt, und Umgebungseinflüsse unterschiedliche Längendehnung (absolut wie auch gegenüber dem Strompfad), die bei größeren Anlagen kompensiert werden müssen, um unerwünschte mechanische Spannungen zu vermeiden.

Der Aufbau von entsprechenden Kompensationseinrichtungen zur Dehnungskompensation bei elektrischen Energieübertragungseinrichtungen kann sehr unterschiedlich gewählt werden. Bei einer Variante wird zum Beispiel ein zugankerüberspannter Wellenbalg zwischen den Wandungen benachbarter Abschnitte eingefügt. Der mindestens eine elektrische Strompfad im Inneren des Kapselungsgehäuses ist dabei unabhängig/losgelöst von diesem Wellenbalg.

Bei der hier vorgeschlagenen Kompensationseinrichtung ist jedoch eine Kompensationseinrichtung mit einem feststoffisolierten Zwischenstück für den mindestens einen elektrischen Leiter vorgesehen. Auch eine derartige Kompensationseinrichtung ist bereits bekannt.

Die Druckschrift DE 10 2015 201 678 A1 zeigt eine elektrische Energieübertragungseinrichtung mit (i) einem elektrischen Strompfad, (ii) einem Kapselungsgehäuse, welches einen ersten und einen zweiten Abschnitt mit entsprechenden Wandungen aufweist und den elektrischen Strompfad in diesen Abschnitten nach außen kapselt und (iii) einer Kompensationseinrichtung zur Dehnungskompensation bei der elektrischen Energieübertragungseinrichtung, wobei diese Kompensationseinrichtung ein feststoffisoliertes Zwischenstück für den elektrischen Strompfad aufweist, das den Strompfad in einem Zwischenraum zwischen dem ersten Abschnitt und dem zweiten Abschnitt des Kapselungsgehäuses nach außen elektrisch isoliert bildet. Der als Hüllkörper bezeichnete Feststoffisolator des Zwischenstücks ist hierbei elastisch und dient gleichzeitig der elektrischen Isolation wie der Dehnungskompensation. Dabei ist ein entsprechender Teilabschnitt des Strompfads in den Hüllkörper/Feststoffisolator eingebettet.

Der Erfindung liegt die Aufgabe zugrunde Maßnahmen anzugeben, durch die ein einfacher Zusammenbau der elektrischen Energieübertragungseinrichtung bei hinreichender elektrischer Isolation und Dehnungskompensation ermöglicht wird.

Die Aufgabe wird erfindungsgemäß durch die Merkmale der unabhängigen Ansprüche gelöst. Vorteilhafte Ausgestaltungen der Erfindung sind Gegenstand der Unteransprüche.

Bei der erfindungsgemäßen elektrischen Energieübertragungseinrichtung mit (i) mindestens einem elektrischen Strompfad, (ii) einem Kapselungsgehäuse, welches einen ersten und einen zweiten Abschnitt mit entsprechenden Wandungen aufweist und den mindestens einen elektrischen Strompfad in diesen Abschnitten nach außen kapselt und (iii) einer Kompensationseinrichtung zur Dehnungskompensation bei der elektrischen Energieübertragungseinrichtung, wobei diese Kompensationseinrichtung ein feststoffisoliertes Zwischenstück pro elektrischem Strompfad aufweist, das diesen elektrischen Strompfad in einem Zwischenraum zwischen dem ersten Abschnitt und dem zweiten Abschnitt des Kapselungsgehäuses nach außen elektrisch isoliert bildet, ist vorgesehen, dass die Kompensationseinrichtung pro feststoffisoliertem Zwischenstück zusätzlich mindestens eine Klemmanordnung mit mindestens einem elastischen Dichtelement für ein dichtendes Befestigen des jeweiligen feststoffisolierten Zwischenstücks an der Wandung des ersten und/oder des zweiten Abschnitts aufweist. Bei einer Mehrzahl von elektrischen Strompfaden ist eine entsprechende Anzahl von feststoffisolierten Zwischenstücken vorgesehen, was den Zusammenbau der elektrischen Energieübertragungseinrichtung vereinfacht und die Dehnungskompensation, insbesondere bei unterschiedlich starken Strömen entlang der einzelnen Strompfade, verbessert. Das feststoffisolierte Zwischenstück für den Strompfad ist ein von einem Feststoffisolator umgebenes Leitungsstück. Durch das zusätzliche Dichtelement bzw. die zusätzlichen Dichtelemente kann der Feststoffisolator weniger elastisch bzw. unelastisch gewählt werden, denn das Dichtelement kann nun die Funktion der Dehnungskompensation ganz oder teilweise übernehmen oder für einen sonstigen Ausgleich sorgen.

Dementsprechend ist gemäß einer bevorzugten Ausführungsform der Erfindung vorgesehen, dass das elastische Dichtelement oder zumindest eines der elastischen Dichtelemente der jeweiligen Klemmanordnung derart ausgestaltet ist, dass es gleichzeitig die Dehnungskompensations- und die Dichtfunktion der Kompensationseinrichtung übernimmt. Dazu wird eine geeignete Kombination bezüglich der Materialwahl und der Dimensionierung des Dichtelements genutzt.

Gemäß einer weiteren bevorzugten Ausführungsform der Erfindung ist bei jedem der Abschnitte des Kapselungsgehäuses in der dem Zwischenraum zugewandten Wandung jeweils ein Durchbruch pro elektrischem Strompfad ausgebildet. An einem den Rand dieses Durchbruchs bildenden Bereichs der entsprechenden Wandung wird das jeweilige feststoffisolierte Zwischenstück mittels des elastischen Dichtelements dichtend befestigt.

Bevorzugt ist vorgesehen, dass das mindestens eine elastische Dichtelement als O-Ring ausgestaltet. Ein solcher O-Ring ist für ein vollumfängliches Abdichten um den Durchbruch herum besonders geeignet.

Gemäß noch einer weiteren bevorzugten Ausführungsform der Erfindung weist die Klemmanordnung Klemmbacken, insbesondere ringförmig ausgebildete Klemmbacken, auf. Es entsteht eine Art "zweiteiliger Klemmring", bei dem jedes der Teile eine Klemmbacke bildet.

Dabei ist insbesondere vorgesehen, dass die Klemmbacken das elastische Dichtelement mit der entsprechenden Wandung verklemmen.

Weiterhin ist bevorzugt vorgesehen, dass das feststoffisolierte Zwischenstück eine Ringschulter-Struktur aufweist, an der die Klemmbacken gehalten sind.

Gemäß noch einer weiteren bevorzugten Ausführungsform der Erfindung ist das feststoffisolierte Zwischenstück für den Strompfad das vom Feststoffisolator umgebene Leitungsstück, wobei der Feststoffisolator als ein Gießharzisolator ausgebildet ist, in dem das Leitungsstück vergossen ist.

Bei der erfindungsgemäßen Kompensationseinrichtung zur Dehnungskompensation bei einer vorstehend genannten elektrischen Energieübertragungseinrichtung, bei der diese Kompensationseinrichtung ein feststoffisoliertes Zwischenstück pro elektrischem Strompfad der elektrischen Energieübertragungseinrichtung aufweist, das diesen elektrischen Strompfad in einem Zwischenraum zwischen dem ersten Abschnitt und dem zweiten Abschnitt des Kapselungsgehäuses der elektrischen Energieübertragungseinrichtung nach außen elektrisch isoliert bildet, ist vorgesehen, dass die Kompensationseinrichtung pro feststoffisoliertem Zwischenstück zusätzlich mindesten eine Klemmanordnung mit mindestens einem elastischen Dichtelement für ein dichtendes Befestigen des jeweiligen feststoffisolierten Zwischenstücks an der Wandung des ersten und/oder des zweiten Abschnitts aufweist.

Sämtliche zuvor im Zusammenhang mit der elektrischen Energieübertragungseinrichtung genannten vorteilhaften Ausgestaltungen mit Bezug zur Kompensationseinrichtung sind entsprechend auch vorteilhafte Ausgestaltungen der Kompensationseinrichtung selbst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigt die
- Fig. 1: eine Schnittdarstellung durch eine elektrische Energieübertragungseinrichtung gemäß einer Ausführungsform der Erfindung im Bereich ihrer Kompensationseinrichtung und
- Fig. 2: eine Vorderansicht auf zwei Abschnitte des Kapselungsgehäuses der in Fig. 1 gezeigten Energieübertragungseinrichtung und der dazwischen angeordneten Kompensationseinrichtung gemäß einer Ausführungsform der Erfindung.

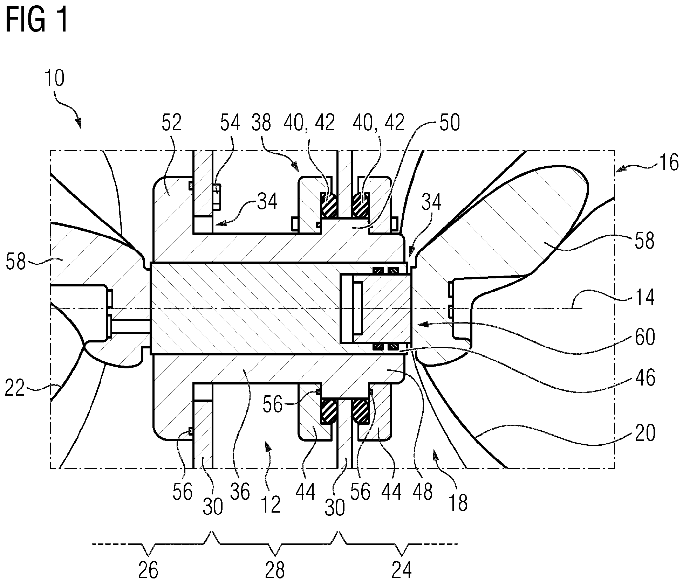

Die Fig. 1 zeigt eine Schnittdarstellung durch eine elektrische Energieübertragungseinrichtung 10 im Bereich einer Kompensationseinrichtung 12 dieser Energieübertragungseinrichtung 10. Eine solche elektrische Energieübertragungseinrichtung 10 findet im Mittel-, Hoch- und/oder Höchstspannungsbereich Anwendung, ist also eine elektrische Energieübertragungseinrichtung 10 für den Mittel-, Hoch- und/oder Höchstspannungsbereich.

Die elektrische Energieübertragungseinrichtung weist zwei Hauptkomponenten auf, nämlich mindestens ein im Wesentlichen längs einer Längsachse 14 der Energieübertragungseinrichtung 10 verlaufender elektrischer Strompfad 16 (auch Phasenleiter genannt) und ein mehrteilig ausgeführtes Kapselungsgehäuse 18. Jeder Teil 20, 22 dieses Kapselungsgehäuses 18 kapselt den mindestens einen elektrischen Strompfad 16 in einem entsprechenden Abschnitt 24, 26 der Energieübertragungseinrichtung 10 nach außen elektrisch isolierend ab. Im gezeigten Beispiel sind nur zwei Abschnitte 24, 26, also ein erster Abschnitt 24 und ein zweiter Abschnitt 26 gezeigt. Selbstverständlich kann es auch weitere Abschnitte geben, die eine Reihe entlang der Achse 14 bilden. Zwischen den benachbarten Abschnitten 24, 26 des Kapselungsgehäuses 18 ist (je) ein Zwischenraum 28 vorgesehen. Durch diesen Zwischenraum 28 wird der mindestens eine elektrische Strompfad 16 feststoffisoliert geführt.

Das Kapselungsgehäuse 18 erfährt durch den Betriebsstrom, der über die elektrischen Strompfade fließt, aber auch durch Umgebungseinflüsse, eine sich verändernde Längendehnung (absolut wie auch gegenüber den einzelnen Strompfaden), die insbesondere bei einer größeren elektrischen Energieübertragungseinrichtung 10 kompensiert werden muss, um unerwünschte mechanische Spannungen zu vermeiden.

Zu diesem Zwecke ist in dem mindestens einen Zwischenraum 28 die Kompensationseinrichtung 12 zur Dehnungskompensation bei der elektrischen Energieübertragungseinrichtung 10 vorgesehen.

Das Kapselungsgehäuse 18 beziehungsweise dessen Teile 20, 22 bestehen im Wesentlichen aus Wandungen 32 in den einzelnen Abschnitten 24, 26, die entsprechende Kavitäten 34 bilden. Bei jedem der Abschnitte 24, 26 des Kapselungsgehäuses 18 ist in der dem Zwischenraum 28 zugewandten Wandung 32 jeweils ein Durchbruch 34 pro elektrischem Strompfad 16 ausgebildet, durch den der entsprechende Strompfad 16 führt.

Die Kompensationseinrichtung 12 weist ein feststoffisoliertes Zwischenstück 36 pro elektrischem Strompfad 16 auf, das ein Segment dieses elektrischen Strompfads 16 in dem Zwischenraum 28 nach außen elektrisch isoliert bildet. Die Kompensationseinrichtung 12 weist weiterhin pro feststoffisoliertem Zwischenstück 36 zusätzlich mindesten eine Klemmanordnung 38 mit zwei elastischen Dichtelementen 40 für ein dichtendes Befestigen des jeweiligen feststoffisolierten Zwischenstücks 36 an der Wandung 30 des ersten Abschnitts 24 auf. Die elastischen Dichtelemente 40 sind als O-Ringe 42 ausgebildet. Die Klemmanordnung 38 weist ein paar Klemmbacken 44, genauer gesagt ringförmig ausgebildete Klemmbacken 44, auf. Diese haben jeweils im Querschnitt eine L-Form, um je eines der beiden Dichtelemente 40 am Außenumfang ihrer Ringform zu umfangen und die Wandung 30 des Kapselungsgehäuses 18 im ersten Abschnitt mit je einem der beiden Dichtelement 40 pro Seite zu verklemmen.

Das feststoffisolierte Zwischenstück 36 bildet einen Teilabschnitt des jeweiligen Strompfades 16. Dazu weist es im inneren ein Leitungsstück 46 und einen dieses Leitungsstück 46 umfänglich umgebenden Feststoffisolator 48 auf. Während das Leitungsstück 46 eine im Wesentlichen Kreiszylinderförmige Kontur besitzt, weist der Feststoffisolator 48 - und damit auch das Zwischenstück 36 insgesamt - noch weitere Zusatzstrukturen 50, 52 im Bereich der Mantelfläche auf. Diese Zusatzstrukturen 50, 52 sind: eine ringförmig umlaufende Vorsprungstruktur 50 in einem Endbereich, der dem einen Ende des Zwischenstücks 36 zugewandt ist und eine Auskragungsstruktur 52 am gegenüberliegenden Ende des Zwischenstücks 36.

Jede der beiden ringförmigen Klemmbacken 44 ist an einer der seitlichen Flanken der ringförmig umlaufende Vorsprungstruktur 50 derart befestigt, dass sie die elastischen Dichtelemente 40 und die Wandung 30 in der Reihung: erstes Dichtelement 40 - Wandung 30 - zweites Dichtelement 40 zwischen sich verklemmen. Auf diese Weise wird das (jeweilige) feststoffisolierten Zwischenstücks 36 mittels der Klemmanordnung 38 über die beiden elastischen Dichtelemente 40 dichtend an der Wandung 30 des ersten Abschnitts 24 im Umfangsbereich des entsprechenden Durchbruchs 34 befestigt. Hier erfolgt also die Dehnungskompensation.

Am anderen Ende ist das feststoffisolierte Zwischenstück 36 über seine Auskragungsstruktur 52 und entsprechende Befestigungselemente 54 direkt oder im Wesentlichen direkt an der Wandung 30 des zweiten Abschnitts 26 des Kapselungsgehäuses befestigt. Hier ist im gezeigten Beispiel also keine Dehnungskompensation vorgesehen.

Weiterhin sind in Nuten einliegende weitere Dichtungselemente 56 an der Auskragungsstruktur 52 und den Klemmbacken 44 im Bereich des ringförmig umlaufenden Vorsprungs 50 vorgesehen. Diese weiteren Dichtungselemente 56 dienen jedoch nicht der Dehnungskompensation, sondern gewährleisten die Abdichtung.

Der Strompfad 16 wird insgesamt, also auch in den Abschnitten 24, 26 des Kapselungsgehäuses, nicht von einem durchgehenden (also einstückigen) elektrischen Leiter gebildet, sondern durch eine Mehrzahl von aneinandergereihten Leitungsstücken 46, 58 von denen das Leitungsstück 46 des feststoffisolierten Zwischenstücks 36 nur eines ist. Hier in Fig. 1 sind die beiden dem Leitungsstück 46 des feststoffisolierten Zwischenstücks 36 vor- bzw. nachgeschalteten Leitungsstücke 58 gezeigt, die den Strompfad 16 im ersten bzw. zweiten Abschnitt 24, 26 bildet oder zumindest mitbilden. Die Verbindung zwischen dem Leitungsstück 46 des feststoffisolierten Zwischenstücks 36 erfolgt dabei über eine Verzapfung 60. Auch dabei sind wieder weitere Dichtungselemente 56 vorgesehen.

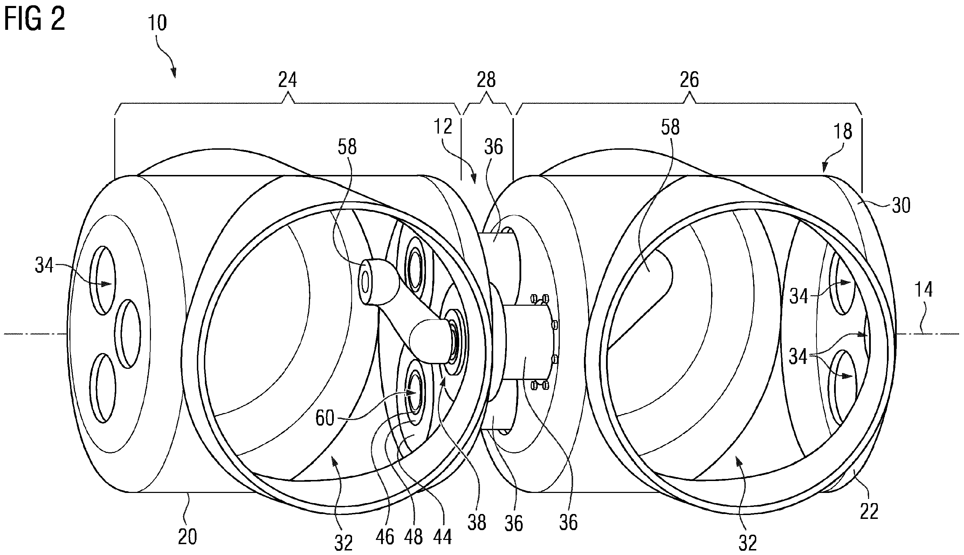

Die Fig. 2 zeigt eine Seitenansicht auf zwei Abschnitte 24, 26 eines Kapselungsgehäuses 18 einer weiteren Energieübertragungseinrichtung 10, die analog zu dem der in Fig. 1 gezeigten Energieübertragungseinrichtung 10 aufgebaut ist. Bei dieser Darstellung wird deutlich, dass bei der Energieübertragungseinrichtung 10 drei Strompfade 16 vorgesehen sind die drei Phasenleiter bilden. Jeder Abschnitt 24, 26 des Kapselungsgehäuses 18 wird von je einem Teil 20, 22 des Kapselungsgehäuses 18 gebildet, zwischen denen ein Zwischenraum 28 ist. Pro elektrischem Strompfad 16 (bzw. pro Phasenleiter) ist ein feststoffisoliertes Zwischenstück 36 der Kompensationseinrichtung 12 vorgesehen, das den entsprechenden elektrischen Strompfad 16 im Zwischenraum 28 nach außen elektrisch isoliert bildet. Dabei sind diese feststoffisolierten Zwischenstücken 36 einheitlich ausgebildet und somit als Bauteile austauschbar. Dies ermöglicht einen einfachen Zusammenbau der elektrischen Energieübertragungseinrichtung bei guter Dehnungskompensation.

Im Folgenden sollen wichtige Eigenschaften und Vorteile der hier vorgestellten Kompensationseinrichtung 12 noch einmal mit anderen Worten beschrieben werden:
Die einphasigen feststoffisolierten Zwischenstücke 36 sind standardisiert und ermöglichen eine kostengünstige, weniger Bauraum einnehmende Verbindungsmöglichkeit zwischen den einzelnen Abschnitten 24, 26 des Kapselungsgehäuses 18 der elektrischen Energieübertragungseinrichtung 10, also beispielsweise den einzelnen GIS Bausteinen (GIS: Gasisolierte Schalteinrichtung).

Das (jeweilige) Zwischenstück 36 besteht im Wesentlichen aus einem in Gießharz vergossenen Leitungsstück 46, zwei als Klemmringe ausgebildeten Klemmbacken 44 sowie zwei als Dehnungs-O-Ringe 42 ausgebildeten Dichtelementen 40.

Die Klemmringe sind jeweils fest mit dem Gießharz-Zwischenstück 36 verbunden, aber lose zwischen den Gehäusewandungen 30. Den Betriebsdruck halten die zwei Dehnungs-O-Ringe 42 zwischen denen die Gehäusewandung 30 eingeklemmt ist. Durch die Flexibilität (Gummi) der Dehnungs-O-Ringe 42 wird die Wärmedehnung aufgenommen.

## Patentansprüche

1. Elektrische Energieübertragungseinrichtung (10) mit
- mindestens einem elektrischen Strompfad (16),
- einem Kapselungsgehäuse (18), welches einen ersten und einen zweiten Abschnitt (24, 26) mit entsprechenden Wandungen (30) aufweist und den mindestens einen elektrischen Strompfad (16) in diesen Abschnitten (24, 26) nach außen kapselt und
- einer Kompensationseinrichtung (12) zur Dehnungskompensation bei der elektrischen Energieübertragungseinrichtung (10), wobei diese Kompensationseinrichtung (12) ein feststoffisoliertes Zwischenstück (36) pro elektrischem Strompfad (16) aufweist, das diesen elektrischen Strompfad (16) in einem Zwischenraum (28) zwischen dem ersten Abschnitt (24) und dem zweiten Abschnitt (6) des Kapselungsgehäuses (18) nach außen elektrisch isoliert bildet,
**dadurch gekennzeichnet, dass** die Kompensationseinrichtung (12) pro feststoffisoliertem Zwischenstück (36) zusätzlich mindesten eine Klemmanordnung (38) mit mindestens einem elastischen Dichtelement (40) für ein dichtendes Befestigen des jeweiligen feststoffisolierten Zwischenstücks (36) an der Wandung (30) des ersten und/oder des zweiten Abschnitts (24, 26) aufweist.

2. Energieübertragungseinrichtung nach Anspruch 1,
**dadurch gekennzeichnet, dass** das elastische Dichtelement (40) oder zumindest eines der elastischen Dichtelemente (40) der jeweiligen Klemmanordnung (38) derart ausgestaltet ist, dass es gleichzeitig die Dehnungskompensationsfunktion und die Dichtfunktion der Kompensationseinrichtung übernimmt.

3. Energieübertragungseinrichtung nach Anspruch 1 oder 2,
**dadurch gekennzeichnet, dass** bei jedem der Abschnitte (24, 26) des Kapselungsgehäuses (18) in der dem Zwischenraum (28) zugewandten Wandung (30) jeweils ein Durchbruch (34) pro elektrischem Strompfad (16) ausgebildet ist.

4. Energieübertragungseinrichtung nach einem der Ansprüche 1 bis 3,
**dadurch gekennzeichnet, dass** das mindestens eine elastische Dichtelement (40) als O-Ring (42) ausgestaltet ist.

5. Energieübertragungseinrichtung nach einem der Ansprüche 1 bis 3,
**dadurch gekennzeichnet, dass** die Klemmanordnung (38) Klemmbacken (44), insbesondere ringförmig ausgebildete Klemmbacken (44), aufweist.

6. Energieübertragungseinrichtung nach Anspruch 5,
**dadurch gekennzeichnet, dass** die Klemmbacken (44) das elastische Dichtelement (40) mit der entsprechenden Wandung (30) verklemmen.

7. Energieübertragungseinrichtung nach Anspruch 5 oder 6,
**dadurch gekennzeichnet, dass** das feststoffisolierte Zwischenstück (36) eine Ringschulter-Struktur (50) aufweist, an der die Klemmbacken (44) gehalten sind.

8. Energieübertragungseinrichtung nach einem der Ansprüche 1 bis 7,
**dadurch gekennzeichnet, dass** das mindestens eine feststoffisolierte Zwischenstück (36) für den jeweiligen Strompfad (16) ein von einem Feststoffisolator (48) umgebenes Leitungsstück (46) ist, wobei der Feststoffisolator (48) insbesondere als Gießharzisolator ausgebildet ist, in dem das Leitungsstück (46) vergossen ist.

9. Energieübertragungseinrichtung nach einem der Ansprüche 1 bis 8,
**dadurch gekennzeichnet, dass** die Kompensationseinrichtung (12) pro feststoffisoliertem Zwischenstück (36) eine Klemmanordnung (38) mit einem elastischen Dichtelement (40) für ein dichtendes Befestigen des jeweiligen feststoffisolierten Zwischenstücks (36) an der Wandung (30) des ersten Abschnitts (24) aufweist und das feststoffisolierte Zwischenstück (36) an der Wandung () des zweiten Abschnitts (26) unmittelbar kontaktierend befestigt ist.

10. Kompensationseinrichtung (12) zur Dehnungskompensation bei einer elektrischen Energieübertragungseinrichtung (10) nach einem der Ansprüche 1 bis 9, wobei die Kompensationseinrichtung (12) ein feststoffisoliertes Zwischenstück (36) pro elektrischem Strompfad (16) der elektrischen Energieübertragungseinrichtung (10) aufweist, das diesen elektrischen Strompfad (16) in einem Zwischenraum (28) zwischen dem ersten Abschnitt (24) und dem zweiten Abschnitt (6) des Kapselungsgehäuses (18) der elektrischen Energieübertragungseinrichtung (10) nach außen elektrisch isoliert bildet,
**dadurch gekennzeichnet, dass**
die Kompensationseinrichtung (12) pro feststoffisoliertem Zwischenstück (36) zusätzlich mindesten eine Klemmanordnung (38) mit mindestens einem elastischen Dichtelement (40) für ein dichtendes Befestigen des jeweiligen feststoffisolierten Zwischenstücks (36) an der Wandung (30) des ersten und/oder des zweiten Abschnitts (24, 26) aufweist.
